# EUROPEAN PATENT APPLICATION

(11) **EP 4 736 662 A1**
(43) Date of publication of application: **06.05.2026**
(21) Application number: 25212106.6
(22) Date of filing: 29.10.2025
(51) Int. Cl.: A23G 9/22, B65B 57/14

(54) **IMPROVEMENTS TO THE CONTROL OF PRODUCTION OF FROZEN ITEMS**

(30) Priority: 29.10.2024 GB 202415922
(71) Applicant: Froneri Ice Cream UK Limited, Northallerton, Yorkshire DL7 9UL (GB)
(72) Inventor: APASA, Ryad, Northallerton, DL7 9UL (GB)
(74) Representative: Wood, Graham

(57) **Abstract**

The invention relates to a method for operating a production system and the production system, for the manufacture of a plurality of frozen foodstuff items. The system includes apparatus for the supply of one or more materials, combining apparatus to combine at least some of said materials to form the said items, apparatus for use in the freezing and hardening of the items and one or more packaging apparatus located downstream of the freezing and hardening apparatus. Control means are provided such that should the combining apparatus or apparatus downstream of the combining apparatus stop operating, an indicator signal is generated and passed to the control means which processes and generates a control signal for at least the combining apparatus so as to at least reduce the throughput of items leaving said combining apparatus for a period of time and hence prevent build up of items and possible wastage of the same.

## Description

The invention to which this application relates is to improvements in the method of control of operation of apparatus for use in the manufacture of frozen items such as, for example, items which include a portion of ice cream or frozen water-based items such as sorbets or the like. One particular, non-limiting, example is an item which includes a wafer, typically in the form of a cone, which supports a portion of ice cream therein.

In the manufacture of large volumes of frozen items which are intended to be supplied for subsequent consumption whilst still in a frozen condition for optimum pleasure, it will be appreciated that it is imperative that the manufacturing process is controlled, in order to allow the items to be provided and then retained in a suitable condition for transportation to a retail point of sale at which the same can be purchased for consumption.

This can be problematic especially when one considers that the manufacturing process includes the provision and operation of a range of apparatus in sequence, typically including apparatus for the supply and filling of ingredient materials, apparatus at which the materials can be combined and/or applied in a stepwise manner and, apparatus, referred to as a freezing tunnel, through which the items are passed to freeze and harden the same, followed by packaging apparatus for groups of the items, which can include; carton erecting apparatus, apparatus for checking the weight and/or other parameters for quality purposes and to check that there is no contamination, as a result of, for example, metal fragments using detection apparatus, and apparatus for the subsequent palletisation or collection for subsequent movement of the items to a storage facility and/or ongoing distribution.

It is found that if, for example, one or more items of the apparatus, such as for example, the packaging apparatus, fails or stops for a period of time, then this can result in considerable wastage as typically, the ongoing operation of apparatus used to supply and fill materials and form the items upstream of the packaging apparatus, quickly creates an oversupply of numbers of items which can no longer be packaged and stored. This can mean that the items have to be removed and destroyed as waste, or, while there may be capacity for storing excess items for a period of time, this then requires additional storage space to be provided and/or labour to be used to subsequently package the additional items. Furthermore, a build-up of items which cannot be moved downstream of the forming apparatus can mean that the material supply and filling apparatus experience a build-up of the materials in the supply apparatus at the initial filling stages.

In addition to the wastage of items and/or raw materials, the closure or stopping of the supply and filling apparatus means that, before the same can be restarted, a thorough cleaning and sterilisation of the apparatus is required to be performed in order to ensure that the apparatus, when restarted, is free of contamination. This can take several hours to achieve which represents significant downtime and hence a reduction in the production rate of the items which in turn, is an economic loss. Furthermore, if the cleaning is not performed adequately, then contamination of the apparatus can result in further economic loss and/or potential issues with regard to the health of consumers who purchase the items.

It will therefore be appreciated that it is important that if part of the apparatus of the described stops for a period of time, then action to prevent or minimise loss of items and/or control operation of the apparatus upstream is desired to be taken as soon as possible.

Conventionally, the approach taken is to stop the apparatus upstream of the broken down apparatus as soon as possible after it is detected that there is an issue with the said broken down apparatus in the production line. By doing so, and despite the fact that subsequent cleaning operations will still be required to be performed, this is conventionally regarded as the only practical way by which to react, in order to avoid further or more significant problems.

It is also known to provide an item capacity storage buffer in terms of an increased size and hence extra capacity within the freezing tunnel but it is found that in practice, this extra capacity is quickly used up and can itself cause a problem in terms of how to deal with the extra items which are stored as the consistency of, for example the ice cream or wafer, can change over time and may lead to the items not being usable, even though it does prevent having to stop the upstream apparatus for a period of time. Furthermore, the provision of the freezing tunnel apparatus which includes the buffer capacity requires the same to be larger in size so as to have sufficient space to accommodate the additional items and also represents additional significant expense in the cost of the apparatus and the operation of the same. As a result, it is found that in many instances, the production apparatus does not include hardening or freezing apparatus with a buffer capability.

An aim of the present invention is to provide a system and method which takes into account, and can more effectively absorb and minimise, the impact of the stoppage of apparatus within a production line for frozen items, and preferably avoid the need to stop the apparatus entirely and thereby avoid potential wastage of items and prevent or reduce the time which is subsequently required to clean the apparatus before the same can be restarted and used.

In a first aspect of the invention, there is provided a method of operation for a production system for the manufacture of a plurality of frozen foodstuff items, said system including apparatus for the supply of one or more materials, combining apparatus to combine at least some of said materials to form the said items, apparatus for use in the freezing and hardening of the items and one or more packaging apparatus located downstream of the freezing and hardening apparatus, and control means wherein should the combining apparatus or apparatus downstream of the combining apparatus stop operating, an indicator signal is generated and passed to the control means which processes and generates a control signal for at least the combining apparatus so as to at least reduce the throughput of items leaving said combining apparatus for a period of time.

In one embodiment, the reduction in throughput of items is determined with respect to an estimated time of stoppage of the said one or more apparatus. Typically the reduction in throughput is selected so as to prevent a buildup of an excessive number of items and, in turn, prevent the need to stop operation of the said combining apparatus during the stoppage of said one or more of the apparatus downstream of the combining apparatus.

Typically, in addition to the operation of the combining apparatus being changed to at least reduce throughput, the material supply apparatus for providing materials thereto is also slowed in operation so as to provide only the amount of materials required to form the reduced throughput of items from the combining apparatus. Typically the rate of slowing down of the material supply apparatus is linked to the reduced throughput rate of the combining apparatus.

In one embodiment, the reduction of the throughput of the combining apparatus and/or material supply apparatus is performed in a graduated manner upon receipt of said control signal so as to prevent any adverse effect which may be caused a sudden slowing of operation of said apparatus.

Typically the rate of reduction of throughput and/or slowing down of the material supply apparatus is dependent on the particular apparatus which has stopped and/or, numbers of apparatus which has stopped at that instant of time. For example, if the apparatus type which has stopped is packaging apparatus in the form of cardboard blank erecting apparatus for boxes into which the items are placed after the freezing and hardening apparatus, then the reduction of throughput will be determined with reference to whether one, all or some of the plurality of the blank erecting apparatus has failed so that it can be determined what the throughput of the apparatus which is still operational will be.

In one embodiment, the packaging apparatus includes said blank erecting and packaging apparatus which is provided to receive the items, weight checking apparatus, contamination checking apparatus, transfer apparatus and/or subsequent transport apparatus.

Typically the system includes transfer apparatus for the items, such as a plurality of robotic means located intermediate the different types of apparatus, and the throughput and operation of the transfer apparatus will typically, if necessary, also be reduced accordingly with the reduction in throughput of the combining and/or freezing and hardening apparatus.

Typically the transfer apparatus is provided between the combining apparatus and the freezing and hardening apparatus and between the hardening or freezing apparatus and the carton erecting apparatus of the packaging apparatus.

In one embodiment, the packaging apparatus includes a plurality of packaging stations, each of which typically performs the same packaging operation and in normal operation the same are synchronised to operate at the same speed. In accordance with the invention, if one or a plurality of said packaging stations stops, then the control signal transmitted to slow operation of the apparatus upstream and the value of the reduction is representative of the number of packaging stations which still remain operational.

In a further aspect of the invention there is provided a production system for the manufacture of a plurality of frozen foodstuff items, said system including apparatus for the supply of one or more materials, combining apparatus to combine at least some of said materials to form the said items, apparatus for use in the freezing and hardening of the items and one or more packaging apparatus located downstream of the freezing and hardening apparatus, and control means wherein should the combining apparatus or apparatus downstream of the combining apparatus stop operating, an indicator signal is generated and passed to the control means which processes and generates a control signal for at least the combining apparatus so as to at least reduce the throughput of items leaving said combining apparatus for a period of time.

Specific embodiments of the invention are now described with reference to the accompanying drawings; wherein
Figure 1 illustrates schematically, a system for use in the manufacturing and packaging of frozen items in accordance with one embodiment of the invention;
Figure 2 illustrates a flow diagram of the apparatus of Figure 1 and a control means therefore in accordance within one embodiment of the invention; and
Figure 3 illustrates a flow diagram of the apparatus in Figure 1 and control means therefore in accordance with a second embodiment of the invention.

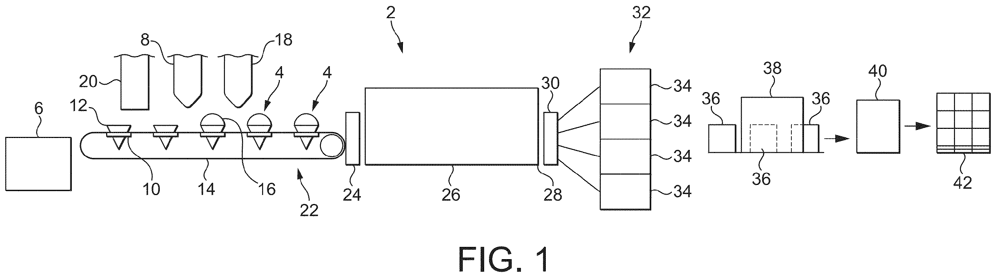

Referring firstly to Figure 1, there is illustrated a production system 2 for use in the manufacture and packing of frozen items 4 and in particular, in this embodiment, items in the form of ice cream cones.

In this embodiment, the system includes supply and filling apparatus including a cone supply station 6 at which empty wafer cones 12 are placed in holders 10 on a conveying system 14. A plurality of material ingredient supply apparatus is provided from which various ingredients are supplied and actions are performed so as to form the said item. In this embodiment the ingredients and actions include, in this embodiment, a station 20 for spraying of chocolate onto the interior face of the cone so as to form a sealed inner surface of the cavity in the cone, an ice cream supply station 8 from which portions 16 of ice cream are provided sequentially into the cavities of cones 12 as they pass the same, and a fruit syrup supply apparatus 18 which deposits portions of syrup, if required for the particular item, onto the ice cream portions and so a plurality of combined items 4 are formed sequentially by the combining apparatus 22.

Typically the conveying system 14 of the combining apparatus 22 for the cones is indexed to allow the stepwise movement of the cones 12 through the combining apparatus 22 and past the various stations and several rows of conveying apparatus are provided so that relatively large numbers of the items are formed at any given time of operation. The combining apparatus 22 includes an exit from which the formed items 4 are removed from the combining apparatus, typically by transfer apparatus in the form of a robotic means 24, which progressively removes the items and places the same into freezing and hardening apparatus 26 which typically comprises a tunnel chamber in which the items 4 are frozen and hardened to a required condition as they are moved along the tunnel. The items 4 are typically moved linearly through the freezing and hardening apparatus 26 to an exit 28 at which there is provided transfer apparatus 30 which, at this stage, removes the hardened items 4 and moves the same to packaging apparatus 32 which typically comprises a number of parallel packaging stations 34. At the stations 34, cardboard box blanks are erected into boxes and groups of the items 4 are placed into the boxes 36.

The boxes 36 are then typically moved, either manually or by transfer means to and through detection apparatus 38 which is used to detect whether any contaminants, such as metal, is present in the items and, if so, the items and/or box containing the same are removed. Those boxes which pass the detection test are then passed to a check weight apparatus 40 and the boxes which pass this test are then placed and grouped together into pallets at location 42 and the pallets can then be moved to a storage premises, or for immediate delivery to retail locations.

It will therefore be appreciated from Figure 1 that the production system is a substantially linear process and in order to ensure maximum throughput efficiency and minimise the downtime, the system 2 is preferably all operated simultaneously and may be continuously operated or at least operated for prolonged periods of time in order to allow the required quantity of items to be manufactured and moved for subsequent storage or delivery most efficiently and with no, or a minimum of, downtime during the planned operating period.

As already stated, it is found in practice that from time to time, certain apparatus of the production system will stop at an unexpected time rather than for scheduled servicing or maintenance. The unscheduled stops are typically either due to a fault in the apparatus itself or to problems in use of the apparatus. It is found that most typically, these stoppages will be caused by problems with the packaging stations 32 and, although the length of stoppage is typically not long, they can be relatively frequent. Furthermore, due to the high volume production throughput, any stoppage of more than a few minutes, may mean that the apparatus upstream of the stopped apparatus and, in particular, the operation of the chocolate 20, ice cream 8 and fruit syrup 18 materials supply apparatus and the combining apparatus 22 and the movement of the formed items, conventionally also has to be stopped and there is then a requirement to place the apparatus in a restart mode which includes the need to clean and sterilise the apparatus before the same can be restarted. This in itself is problematic and time consuming. Furthermore, if the pipework in said materials supply apparatus is full of, for example, ice cream at the time of stoppage, then the pipework has to be removed, emptied and cleaned, which again increases down time. Yet further, the need for human intervention to undertake the cleaning operation, increases the risk of contamination of the apparatus.

In accordance with the invention, there is provided a control system which reacts to a stoppage in one or more of the apparatus or part of the apparatus and when reacting to the same, causes a controlled operation of other items of the apparatus so as to prevent, or at least minimise, downtime of other apparatus in the system and hence minimise wastage of items and materials.

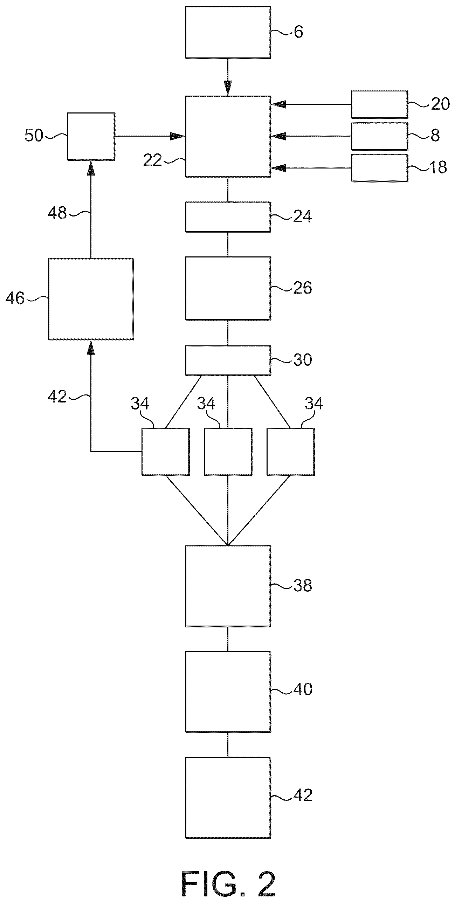

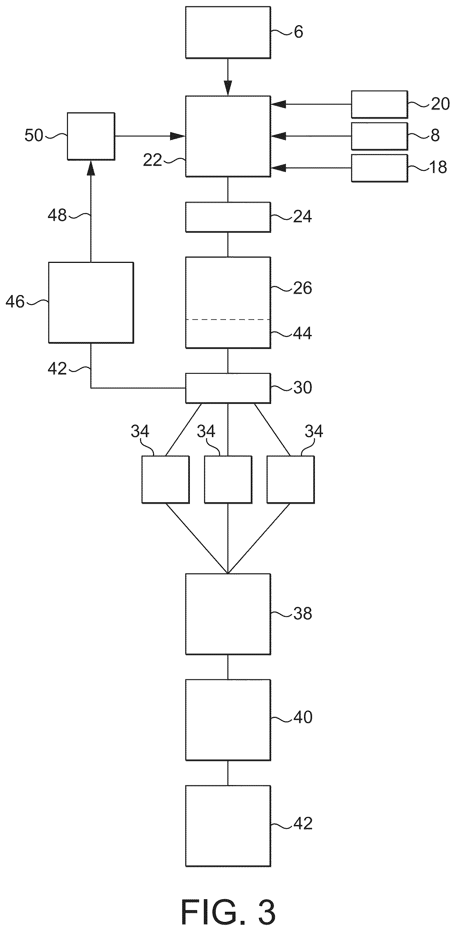

Figures 2 and 3 illustrate flow charts of operation of the apparatus in accordance with two embodiments of the invention.

In Figure 2, there is illustrated a production system in which the hardening or freezing apparatus 26 has no buffer storage capacity in terms of its size. In Figure 3, the hardening and freezing apparatus 26 does have a buffer storage capacity of a finite amount.

Figure 2 illustrates the control system in accordance with one embodiment of the invention if there is no buffer or additional capacity available in the freezing apparatus 26. In this embodiment, the scenario described is that all the packaging apparatus stations 34 have stopped. Thus, in accordance with the invention, when failure of the packaging apparatus stations 34 is detected, an indication signal 42 is transmitted from the packaging apparatus to control means 46 for the operation of the system 2 to indicate that the packaging apparatus stations have failed. The control means processes the signal 42 and calculates the impact of the failure in terms of the volume of throughput of the apparatus 6,20,8,28,22,24 and 26 which is located upstream of the packaging apparatus stations 34. One or more control signals 48 are then transmitted to the operation control 50 for the apparatus upstream apparatus. In this scenario the control signal 48 which is generated acts to reduce the operation of the upstream apparatus to a lowest possible throughput, whilst maintaining some level of throughput and movement through the apparatus to prevent the same from having to be shut down completely.

This reduced throughput status can then be maintained for a period of time and, if during that period of time, the packaging apparatus stations 34 recommence operation, then the throughput can be increased, typically on a ramped basis, to return over time to the optimum throughput speed. Alternatively, if only a number of the packaging stations 34, can recommence operation, then the throughput rate may be increased but only by an extent which can be coped with by those packaging stations 34 which are then operating.

In Figure 3, the freezing and hardening apparatus 26 capacity includes a storage buffer inasmuch that there is an extra volume of capacity 44 which can be used to accommodate items which can be held in the freezing and hardening 26 apparatus for a period of time before being dispensed and without adversely affecting the condition of the items. Thus, in this scenario, if for example, the transfer apparatus 30 fails, then an indication signal 42 is transmitted to indicate this and a control signal 48 is emitted from the control means 46 and which will result in the throughput of the upstream apparatus 6,20,8,18,22,24,26, in the first instance, not being reduced or alternatively, to be reduced by an amount so as to allow the buffer or extra capacity in the hardening and freezing apparatus to be moved into a storage mode so that the buffer storage is filled over a predetermined time which may, for example, be an estimate of the time required to repair the transfer apparatus. If, after a period of time, the transfer apparatus 30 recommences operation, then a control signal 48 is transmitted to allow the apparatus to recommence normal operation once the extra capacity items in the freezing apparatus have been dispensed and packaged. If the transfer means 30 does not return to normal operation within that given time period, then a further control signal may be sent to further reduce throughput of the upstream apparatus in recognition that the extra capacity of the hardening and freezing apparatus may be used up if the apparatus upstream was to continue to operate at the previous throughput level. When the transfer means 30 returns to normal operation then the throughput of the upstream apparatus is moved back to optimum throughput speed.

Thus, in accordance with the invention, there is provided a system and method whereby the operational throughput of the apparatus in the production line located upstream of the parts of the production system which have stopped, can be controlled and operated so as to take into account the failure or maintenance requirements for that part of the production system and prevent or minimise the need for stoppage of apparatus upstream of the failed apparatus in the production system.

## Claims

1. A method of operation for a production system for the manufacture of a plurality of frozen foodstuff items, said system including apparatus for the supply of one or more materials, combining apparatus to combine at least some of said materials to form the said items, apparatus for use in the freezing and hardening of the items and one or more packaging apparatus located downstream of the freezing and hardening apparatus, and control means wherein should the combining apparatus or apparatus downstream of the combining apparatus stop operating, an indicator signal is generated and passed to the control means which processes and generates a control signal for at least the combining apparatus so as to at least reduce the throughput of items leaving said combining apparatus for a period of time.

2. A method according to claim 1 wherein the reduction in throughput of items is determined with respect to an estimated time of stoppage of the apparatus which has stopped.

3. A method according to claim 1 or 2 wherein the reduction in throughput is selected so as to prevent a buildup of items being formed and, in turn, prevent the need to stop operation of the said combining apparatus during the stoppage of said one or more of the apparatus downstream of the combining apparatus.

4. A method according to any of the preceding claims wherein the control signal causes the material supply apparatus for providing materials thereto to be slowed in operation so as to provide only the amount of said materials required to form the reduced throughput of items from the combining apparatus.

5. A method according to claim 4 wherein the rate of slowing down of the material supply apparatus is linked to the reduced throughput rate of the combining apparatus, resulting from the receipt of said control signal.

6. A method according to any of the preceding claims wherein the reduction of the throughput of the combining apparatus and/or material supply apparatus is performed in a graduated manner upon receipt of said control signal.

7. A method according to any of the preceding claims wherein the rate of reduction of throughput of items and/or slowing down of the material supply apparatus is dependent on the particular apparatus which has stopped and/or numbers of apparatus which have stopped at that instant of time.

8. A method according to any of the preceding claims wherein the packaging apparatus downstream of the freezing and hardening apparatus includes box forming and erecting apparatus to form boxes into which the items are placed after leaving the freezing and hardening apparatus.

9. A method according to claim 8 wherein the reduction of throughput is determined with reference to whether all, one or a plurality of said box forming and erecting apparatus has failed and/or the number of said box forming and erecting apparatus which still remains operational.

10. A method according to any of the preceding claims wherein the said packaging apparatus includes weight checking apparatus, contamination checking apparatus, transfer apparatus and/or subsequent transport apparatus, or any combination thereof.

11. A method according to any of the preceding claims wherein the production system includes transfer apparatus for the items located intermediate the combining apparatus, freezing and hardening apparatus and/or packaging apparatus and the throughput in operation of the transfer apparatus is altered accordingly with the alteration and operation of the combining and/or freezing and hardening apparatus which occurs at that time.

12. A method according to claim 11 wherein the transfer apparatus is provided in the form of robotic means.

13. A method according to any of the preceding claims wherein the packaging apparatus includes a plurality of packaging stations, each of which performs the same packaging operation, and are synchronised to operate at the same speed when operating correctly.

14. A method according to claim 1 wherein the period of time is typically that which is required to repair the packaging apparatus and once repaired to allow the items which have already been produced to be packaged and whereupon normal operation of the combining apparatus and the freezing and hardening apparatus is recommenced.

15. A system according to claim 17 wherein the recommencement of operation of the combining apparatus and freezing and hardening apparatus is performed by the generation of a further control signal when the normal operation of the packaging apparatus has been indicated.

16. A production system for the manufacture of a plurality of frozen foodstuff items, said system including apparatus for the supply of one or more materials, combining apparatus to combine at least some of said materials to form the said items, apparatus for use in the freezing and hardening of the items and one or more packaging apparatus located downstream of the freezing and hardening apparatus, and control means wherein should the combining apparatus or apparatus downstream of the combining apparatus stop operating, an indicator signal is generated and passed to the control means which processes and generates a control signal for at least the combining apparatus so as to at least reduce the throughput of items leaving said combining apparatus for a period of time.
